# EUROPEAN PATENT APPLICATION

(11) **EP 4 447 535 A1**
(43) Date of publication of application: **16.10.2024**
(21) Application number: 21966863.9
(22) Date of filing: 10.12.2021
(51) Int. Cl.: H04W 24/10, H04W 72/54

(54) **MEASUREMENT GAP CONFIGURATION METHOD AND APPARATUS**

(71) Applicant: Beijing Xiaomi Mobile Software Co., Ltd., Beijing 100085 (CN)
(72) Inventor: LI, Xiaolong, Beijing 100085 (CN)
(74) Representative: Stöckeler, Ferdinand
(86) International application number: PCT/CN2021/137263
(87) International publication number: WO 2023/102945

(57) **Abstract**

Disclosed in the embodiments of the present application are a measurement gap configuration method and apparatus. The method comprises: receiving first configuration information sent by a core network device, wherein the first configuration information is used for determining first measurement gap configuration information, and the first measurement gap configuration information is used for configuring a measurement gap of a terminal device. Configuration information related to a measurement gap can be configured to a terminal device in advance, such that the terminal device can quickly request the activation or deactivation of the measurement gap on the basis of the measurement gap configured in advance, a positioning delay is effectively reduced, and the positioning efficiency is improved.

## Description

### TECHNICAL FIELD

The present disclosure relates to the field of communication technology, and more particularly, to a method and an apparatus for configuring a measurement gap.

### BACKGROUND

In a 5G new radio (NR) system, typically, more than one positioning technology is introduced. Some positioning technologies require a terminal to measure a positioning reference signal (PRS), such that the terminal needs to request a measurement gap (MG) for measuring the PRS from a network. In the related art, it takes a long time for the terminal to request the MG from the network using a radio resource control (RRC) message. In order to reduce positioning delay, it has been contemplated that a media access control (MAC) control element (CE) of a MAC layer may be used to request the network to activate the measurement gap. However, the MAC CE does not contain sufficient information.

### SUMMARY

According to a first aspect of embodiments of the present disclosure, a method for configuring a measurement gap is provided. The method is performed by a radio access network (RAN) device, and the method includes:
receiving first configuration information sent by a core network device;
in which the first configuration information is configured to determine first measurement gap configuration information, and the first measurement gap configuration information is used to configure a measurement gap for a terminal device.

Optionally, the method further includes: sending the first measurement gap configuration information to the core network device.

Optionally, the first configuration information includes at least one of positioning reference signal (PRS) configuration information or measurement gap configuration information.

Optionally, the method further includes: sending a radio resource control (RRC) message to the terminal device, in which the RRC message includes the first measurement gap configuration information.

Optionally, sending the first measurement gap configuration information to the core network device includes: sending a new radio positioning protocol A (NRPPa) message to the core network device, in which the NRPPa message includes the first measurement gap configuration information.

Optionally, receiving the first configuration information sent by the core network device includes: receiving an NRPPa message sent by the core network device, in which the NRPPa message includes the first configuration information.

According to a second aspect of the embodiments of the present disclosure, a method for configuring a measurement gap is provided. The method is performed by a core network device, and the method includes:
sending first configuration information to a radio access network (RAN) device;
in which the first configuration information is configured to determine first measurement gap configuration information, and the first measurement gap configuration information is used to configure a measurement gap for a terminal device.

Optionally, the method further includes: receiving the first measurement gap configuration information sent by the RAN device.

Optionally, the first configuration information includes at least one of PRS configuration information or measurement gap configuration information.

Optionally, receiving the first measurement gap configuration information sent by the RAN device includes: receiving an NRPPa message sent by the RAN device, in which the NRPPa message includes the first measurement gap configuration information.

Optionally, sending the first configuration information to the RAN device includes: sending an NRPPa message to the RAN device, in which the NRPPa message includes the first configuration information.

According to a third aspect of the embodiments of the present disclosure, a method for configuring a measurement gap is provided. The method is performed by a core network device, and the method includes:
determining second measurement gap configuration information; and
sending the second measurement gap configuration information through an RAN device, in which the second measurement gap configuration information is used to configure a measurement gap for a terminal device.

Optionally, the method further includes: sending the second measurement gap configuration information to the RAN device.

Optionally, determining the second measurement gap configuration information includes: determining the second measurement gap configuration information based on at least one of PRS configuration information, a positioning precision, and a positioning delay requirement.

Optionally, sending the second measurement gap configuration information to the terminal device includes: sending a long term evolution positioning protocol (LPP) message through the RAN device, in which the LPP message includes the second measurement gap configuration information.

Optionally, sending the second measurement gap configuration information to the RAN device includes: sending an NRPPa message to the RAN device, in which the NRPPa message includes the second measurement gap configuration information.

According to a fourth aspect of the embodiments of the present disclosure, a method for configuring a measurement gap is provided. The method is performed by an RAN device, and the method includes:
receiving second measurement gap configuration information sent by a core network device, in which the second measurement gap configuration information is used to configure a measurement gap for a terminal device.

Optionally, receiving the second measurement gap configuration information sent by a core network device includes: receiving an NRPPa message sent by the core network device, in which the NRPPa message includes the second measurement gap configuration information.

According to a fifth aspect of the embodiments of the present disclosure, a method for configuring a measurement gap is provided. The method is performed by a terminal device, and the method includes:
receiving measurement gap configuration information sent by an RAN device, in which the measurement gap configuration information is used to configure a measurement gap for the terminal device.

Optionally, the measurement gap configuration information is first measurement gap configuration information determined by the RAN device, and receiving the measurement gap configuration information sent by the RAN device includes: receiving an RRC message sent by the RAN device, in which the RRC message includes the first measurement gap configuration information.

Optionally, the measurement gap configuration information is second measurement gap configuration information determined by a core network device, and receiving the measurement gap configuration information sent by the RAN device includes: receiving an LPP message sent by the RAN device, in which the LPP message includes the second measurement gap configuration information.

According to a sixth aspect of the embodiments of the present disclosure, an apparatus for configuring a measurement gap is provided. The apparatus is applied to an RAN device, and the apparatus includes:
a transceiver unit, configured to receive first configuration information sent by a core network device;
in which the first configuration information is configured to determine first measurement gap configuration information, and the first measurement gap configuration information is used to configure a measurement gap for a terminal device.

Optionally, the transceiver unit is further configured to send the first measurement gap configuration information to the core network device.

Optionally, the first configuration information includes at least one of PRS configuration information or measurement gap configuration information.

Optionally, the transceiver unit is further configured to: send an RRC message to the terminal device, in which the RRC message includes the first measurement gap configuration information.

Optionally, the transceiver unit is configured to: send an NRPPa message to the core network device, in which the NRPPa message includes the first measurement gap configuration information.

Optionally, the transceiver unit is configured to: receive an NRPPa message sent by the core network device, in which the NRPPa message includes the first configuration information.

According to a seventh aspect of the embodiments of the present disclosure, an apparatus for configuring a measurement gap is provided. The apparatus is applied to a core network device, and the apparatus includes:
a transceiver unit, configured to send first configuration information to an RAN device;
in which the first configuration information is configured to determine first measurement gap configuration information, and the first measurement gap configuration information is used to configure a measurement gap for a terminal device.

Optionally, the transceiver unit is further configured to: receive the first measurement gap configuration information sent by the RAN device.

Optionally, the first configuration information includes at least one of PRS configuration information or second measurement gap configuration information.

Optionally, the transceiver unit is configured to: receive an NRPPa message sent by the RAN device. The NRPPa message includes the first measurement gap configuration information.

Optionally, the transceiver unit is configured to: send an NRPPa message to the RAN device. The message includes the first configuration information.

According to an eighth aspect of the embodiments of the present disclosure, an apparatus for configuring a measurement gap is provided. The apparatus is applied to a core network device, and the apparatus includes:
a processing unit, configured to determine second measurement gap configuration information; and
a transceiver unit, configured to send the second measurement gap configuration information through an RAN device, in which the second measurement gap configuration information is used to configure a measurement gap for a terminal device.

Optionally, the transceiver unit is further configured to: send the second measurement gap configuration information to the RAN device.

Optionally, the processing unit is configured to: determine the second measurement gap configuration information based on at least one of PRS configuration information, a positioning precision, and a positioning delay requirement.

Optionally, the transceiver unit is configured to: send an LPP message through the RAN device, in which the LPP message includes the second measurement gap configuration information.

Optionally, the transceiver unit is configured to: send an NRPPa message to the RAN device, in which the NRPPa message includes the second measurement gap configuration information.

According to a ninth aspect of the embodiments of the present disclosure, an apparatus for configuring a measurement gap is provided. The apparatus is applied to an RAN device, and the apparatus includes:
a transceiver unit, configured to receive second measurement gap configuration information sent by a core network device, in which the second measurement gap configuration information is used to configure a measurement gap for a terminal device.

Optionally, the transceiver unit is configured to: receive an NRPPa message sent by the core network device, in which the NRPPa message includes the second measurement gap configuration information.

According to a tenth aspect of the embodiments of the present disclosure, an apparatus for configuring a measurement gap is provided. The apparatus is applied to a terminal device, and the apparatus includes:
a transceiver unit, configured to receive measurement gap configuration information sent by an RAN device, in which the measurement gap configuration information is used to configure a measurement gap for the terminal device.

Optionally, the measurement gap configuration information is first measurement gap configuration information determined by the RAN device, the transceiver unit is configured to: receive an RRC message sent by the RAN device, in which the RRC message includes the first measurement gap configuration information.

Optionally, the measurement gap configuration information is second measurement gap configuration information determined by a core network device, the transceiver unit is configured to: receive an LPP message sent by the RAN device, in which the LPP message includes the second measurement gap configuration information.

According to an eleventh aspect of the embodiments of the present disclosure, a communication device is provided. The communication device includes a processor and a memory. The memory stores a computer program, and the processor executes the computer program stored in the memory, to cause the device to perform the method for configuring a measurement gap according to the embodiments of the first aspect, or perform the method for configuring a measurement gap according to the embodiments of the fourth aspect.

According to a twelfth aspect of the embodiments of the present disclosure, a communication device is provided. The communication device includes a processor and a memory. The memory stores a computer program, and the processor executes the computer program stored in the memory, to cause the device to perform the method for configuring a measurement gap according to the embodiments of the second aspect, or perform the method for configuring s measurement gap according to the embodiments of the third aspect.

According to a thirteenth aspect of the embodiments of the present disclosure, a communication device is provided. The device includes a processor and a memory. The memory stores a computer program, and the processor executes the computer program stored in the memory, to cause the device to perform the method for configuring a measurement gap according to the embodiments of the fifth aspect.

According to a fourteenth aspect of the embodiments of the present disclosure, a communication device is provided. The communication device includes a processor and an interface circuit. The interface circuit is configured to receive code instructions and transmit the code instructions to the processor, and the processor is configured to run the code instructions to cause the device to perform the method for configuring a measurement gap according to the embodiments of the first aspect, or perform the method for configuring a measurement gap according to the embodiments of the fourth aspect.

According to a fifteenth aspect of the embodiments of the present disclosure, a communication device is provided. The communication device includes a processor and an interface circuit. The interface circuit is configured to receive code instructions and transmit the code instructions to the processor, and the processor is configured to run the code instructions to cause the device to perform the method for configuring a measurement gap according to the embodiments of the second aspect, or perform the method for configuring a measurement gap according to the embodiments of the third aspect.

According to a sixteenth aspect of the embodiments of the present disclosure, a communication device is provided. The communication device includes a processor and an interface circuit. The interface circuit is configured to receive code instructions and transmit the code instructions to the processor, and the processor is configured to run the code instructions to cause the device to perform the method for configuring a measurement gap according to the embodiments of the fifth aspect.

According to a seventeenth aspect of the embodiments of the present disclosure, a computer-readable storage medium is provided. The computer-readable storage medium is configured to store instructions, when the instructions is executed, the method for configuring a measurement gap according to the embodiments of the first aspect is implemented, or the method for configuring a measurement gap according to the embodiments of the fourth aspect is implemented.

According to an eighteenth aspect of the embodiments of the present disclosure, a computer-readable storage medium is provided. The computer-readable storage medium is configured to store instructions, when the instructions are executed, the method for configuring a measurement gap according to the embodiments of the second aspect is implemented, or the method for configuring a measurement gap according to the embodiments of the third aspect is implemented.

According to a nineteenth aspect of the embodiments of the present disclosure, a computer-readable storage medium is provided. The computer-readable storage medium is configured to store instructions, and when the instructions are executed, the method for configuring a measurement gap according to the embodiments of the fifth aspect is implemented.

According to a twentieth aspect of the embodiments of the present disclosure, a computer program is provided. When the computer program is running on a computer, a computer is caused to perform the method for configuring a measurement gap according to the embodiments of the first aspect, or perform the method for configuring a measurement gap according to the embodiments of the third aspect.

According to a twenty-first aspect of the embodiments of the present application, a computer program is provided. When the computer program is running on a computer, a computer is caused to perform the method for configuring a measurement gap according to the embodiments of the second aspect, or perform the method for configuring a measurement gap according to the embodiments of the third aspect.

According to a twenty-second aspect of the embodiments of the present disclosure, a computer program is provided. When the computer program is running on a computer, a computer is caused to perform the method for configuring a measurement gap according to the embodiments of the fifth aspect.

According to the method and apparatus for configuring a measurement gap provided in the embodiments of the present disclosure, by receiving first configuration information sent by a core network device, in which the first configuration information is used to determine first measurement gap configuration information, and the first measurement gap configuration information is used to configure a measurement gap for a terminal device, configuration information related to the measurement gap can be configured to the terminal device in advance, so that the terminal device can quickly request to activate or deactivate the measurement gap based on the measurement gap configured in advance, thereby effectively reducing a positioning delay and improving a positioning efficiency.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

In order to clearly illustrate technical solutions of embodiments of the disclosure or background technologies, the accompanying drawings used in the embodiments or the background technologies will be explained below.
FIG. 1 is a schematic diagram of a communication system according to an embodiment of the present disclosure.
FIG. 2 is a flowchart of a method for configuring a measurement gap according to an embodiment of the present disclosure.
FIG. 3 is a flowchart of a method for configuring a measurement gap according to an embodiment of the present disclosure.
FIG. 4 is a flowchart of a method for configuring a measurement gap according to an embodiment of the present disclosure.
FIG. 5 is a flowchart of a method for configuring a measurement gap according to an embodiment of the present disclosure.
FIG. 6 is a flowchart of a method for configuring a measurement gap according to an embodiment of the present disclosure.
FIG. 7 is a flowchart of a method for configuring a measurement gap according to an embodiment of the present disclosure.
FIG. 8 is a flowchart of a method for configuring a measurement gap according to an embodiment of the present disclosure.
FIG. 9 is a flowchart of a method for configuring a measurement gap according to an embodiment of the present disclosure.
FIG. 10 is a flowchart of a method for configuring a measurement gap according to an embodiment of the present disclosure.
FIG. 11 is a flowchart of a method for configuring a measurement gap according to an embodiment of the present disclosure.
FIG. 12 is a block diagram of an apparatus for configuring a measurement gap according to an embodiment of the present disclosure.
FIG. 13 is a block diagram of an apparatus for configuring a measurement gap according to an embodiment of the present disclosure.
FIG. 14 is a block diagram of an apparatus for configuring a measurement gap according to an embodiment of the present disclosure.
FIG. 15 is a block diagram of an apparatus for configuring a measurement gap according to an embodiment of the present disclosure.
FIG. 16 is a block diagram of an apparatus for configuring a measurement gap according to an embodiment of the present disclosure.
FIG. 17 is a block diagram of an apparatus for configuring a measurement gap according to an embodiment of the present disclosure.
FIG. 18 is a block diagram of an apparatus for configuring a measurement gap according to an embodiment of the present disclosure.
FIG. 19 is a block diagram of a chip according to an embodiment of the present disclosure.

### DETAILED DESCRIPTION

Embodiments will be described in detail herein, examples of which are illustrated in the accompanying drawings. When the following description refers to the accompanying drawings, the same or similar elements may be denoted by the same numerals in different accompanying drawings, unless otherwise indicated. The implementations described in the following embodiments do not represent all possible implementations consistent with the disclosure. Instead, they are merely examples of apparatuses and methods consistent with aspects of embodiments of the disclosure as detailed in the appended claims.

The terms employed in the embodiments of the disclosure are merely for the purpose of describing a detailed embodiment, and are not intended to limit embodiments of the disclosure. As used in embodiments of the disclosure and the appended claims, a singular form "a/an" or "the/said" is also intended to include plural forms, unless the context clearly indicates other meaning. It should also be understood that, the term "and/or" as used herein refers to including any or all possible combinations of one or more associated listed items.

It should be understood that, although the terms such as "first, second, third" may be employed in embodiments of the disclosure to describe various kinds of information, such various kinds of information should not be limited to these terms. These terms are merely used to distinguish a same type of information from each other. For example, without departing from a scope of embodiments of the disclosure, first information may also be called second information, and similarly, the second information may also be called the first information. Depending on the context, the term "if' as used herein may be interpreted as "when" or "in a case that..." or "in response to a determination".

The embodiments of the present disclosure are described in detail below, and examples of the embodiments are illustrated in the accompanying drawings, in which the same or similar elements and the elements are denoted by like reference numerals throughout the descriptions. The embodiments described below with reference to the accompanying drawings are exemplary, and are intended to explain the disclosure, but should not be construed to limit the present disclosure.

In order to better understand the method for configuring a measurement gap disclosed in the embodiments of the present disclosure, a communication system to which the embodiments of the present disclosure are applicable is firstly described below.

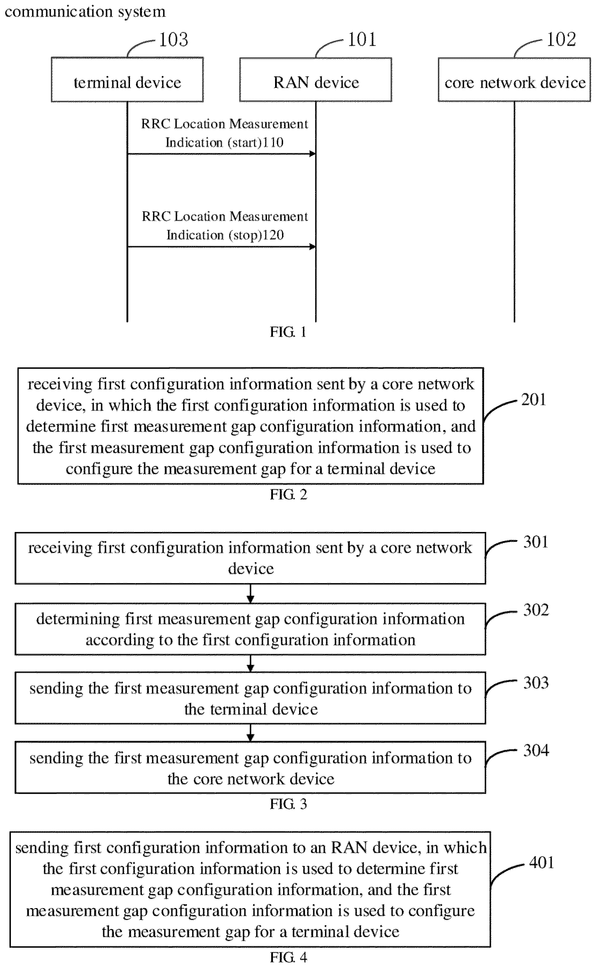

Referring to FIG. 1, FIG. 1 is a block diagram of a communication system according to an embodiment of the present disclosure. The communication system may include, but is not limited to, one radio access network (RAN) device, one core network (CN) device and one terminal device. The number and form of devices shown in FIG. 1 are merely used for examples and do not constitute a limitation on the embodiments of the present disclosure, and the communication system may include two or more RAN devices, two or more CN devices and two or more terminal devices in practical applications. As illustrated in FIG. 1, the communication system includes, for example, one RAN device 101, one core network device 102 and one terminal device 103.

It should be noted that the technical solutions of the embodiments of the present disclosure may be applied to various communication systems, such as a long term evolution (LTE) system, a 5th generation (5G) mobile communication system, a 5G new radio (NR) system, or other future new mobile communication systems.

The RAN device 101 in the embodiments of the present disclosure is an entity used to send or receive a signal on a network side. For example, the RAN device 101 may be an evolved NodeB (eNB), a transmission reception point (TRP), a next generation NodeB (gNB) in an NR system, a base station in a future mobile communication system or an access node in a wireless fidelity (WiFi) system, and the like. The specific technology and specific device forms used by the network device are not limited in the embodiments of the present disclosure. The network device provided in the embodiments of the present disclosure may be composed of a central unit (CU) and a distributed unit (DU). The CU may also be referred to as a control unit. A structure of CU-DU allows a protocol layer of the network device, such as a base station, to be split, some functions of the protocol layer are placed in the CU for centralized control, and some or all of the remaining functions of the protocol layer are distributed in the DU, which is intensively controlled by the CU.

The CN device 102 in the embodiments of the present disclosure is an entity for location estimation on a network side. For example, the CN device 102 may be a location management function (LMF), or the like.

The terminal device 103 in the embodiments of the present disclosure is an entity used to receive or send the signal on a user side, for example, a mobile phone. The terminal device may also be referred to as a terminal, a user equipment (UE), a mobile station (MS), a mobile terminal (MT), or the like. The terminal device may be an automobile with a communication function, an intelligent automobile, a mobile phone, a wearable device, a pad, a computer with a wireless transceiver function, a virtual reality (VR) terminal device, an augmented reality (AR) terminal device, a wireless terminal device in industrial control, a wireless terminal device in the self-driving, a wireless terminal device in the remote medical surgery, a wireless terminal device in the smart grid, a wireless terminal device in the transportation safety, a wireless terminal device in the smart city, a wireless terminal device in the smart home, and the like. The specific technology technologies and specific device forms used by the terminal device are not limited in the embodiments of the present disclosure.

In the 5G NR system, more than one positioning technology is introduced, and some positioning technologies require a terminal to measure a positioning reference signal (PRS), so that the terminal needs to request a measurement gap (MG) for measuring the PRS from a network.

In the related art, when the terminal device 103 needs to perform a positioning measurement requested by the core network device 102, if no measurement gap is configured for the terminal device 103 at present or the configured measurement gap cannot meet requirements of the terminal device 103, the terminal device 103 requests the measurement gap from the RAN device 101 through a radio resource control (RRC) message.

As shown in FIG. 1, the terminal device 103 requests a measurement gap from the RAN device 101 through the RRC message 110. After the terminal device 103 completes a positioning-related measurement, the terminal device 103 may indicate that the measurement is completed to the RAN device 101 through the RRC message 120.

The process of requesting and obtaining the measurement gap by the terminal device 103 is implemented through RRC messages, which requires a long time, and has a relatively high positioning delay, so that a media access control (MAC) control element (CE) of a MAC layer is considered to be used to request the RAN device 101 to activate/deactivate the measurement gap to reduce the positioning delay. The terminal device 103 may request the RAN device 101 to activate/deactivate the measurement gap through the MAC CE. The RAN device 101 may also activate/deactivate the measurement gap for the terminal device 103 through the MAC CE. However, compared with the RRC message, the MAC CE contains less information.

In the embodiments of the present disclosure, by receiving first configuration information sent by a core network device, in which the first configuration information is used to determine first measurement gap configuration information, and the first measurement gap configuration information is used to configure a measurement gap for a terminal device, configuration information related to the measurement gap can be configured to the terminal device in advance, so that the terminal device can quickly request to activate or deactivate the measurement gap based on the measurement gap configured in advance, thereby effectively reducing a positioning delay and improving a positioning efficiency.

It is understood that the communication system described in the embodiments of the disclosure is intended to more clearly illustrate the technical solutions of the embodiments of the disclosure, and does not constitute a limitation on the technical solutions provided by the embodiments of the disclosure. It is understood by those skilled in the art that as the system architecture evolves and new business scenarios emerge, the technical solutions provided by the embodiments of the disclosure are also applicable to similar technical problems.

The method and apparatus for configuring a measurement gap provided in the present disclosure will be described in detail below with reference to the accompanying drawings.

As shown in FIG. 2, FIG. 2 is a flowchart of a method for configuring a measurement gap according to an embodiment of the present disclosure. It should be noted that the method for configuring a measurement gap in this embodiment of the present disclosure is performed by an RAN device. The RAN device is an entity used to send or receive a signal on a network side, such as a gNB or a TRP, which is not limited in the embodiments of the present disclosure. As shown in FIG. 2, the method may include the following steps.

At step 201, first configuration information sent by a core network device is received, in which the first configuration information is configured to determine first measurement gap configuration information, and the first measurement gap configuration information is used to configure a measurement gap for a terminal device.

The core network device is an entity for location estimation, such as an LMF, on the network side.

The RAN device receives the first configuration information sent by the core network device, to determine the first measurement gap configuration information for the terminal device based on the first configuration information, and configure the measurement gap for the terminal device.

The first configuration information is used for the RAN device to determine the first measurement gap configuration information for the terminal device. The first measurement gap configuration information is used to request a target measurement gap for the terminal device from at least one measurement gap configured by the first measurement gap configuration information. The first measurement gap configuration information includes a period, an offset parameter, and the like of the at least one measurement gap.

In some embodiments, the RAN device receives the first configuration information through an NR positioning protocol A (NRPPa) message.

Optionally, the NRPPa message may be an NRPPa PRS configuration request (PRS configuration request message).

In some embodiments, the first configuration information includes at least one of PRS configuration information or measurement gap configuration information.

In a first possible implementation, the RAN device may determine the first measurement gap configuration information according to the PRS configuration information.

The PRS configuration information includes a related configuration of a PRS, for example, a type of the PRS, a period of the PRS, a resource position of the PRS, and the like. The RAN device may determine the first measurement gap configuration information for the terminal device according to received PRS configuration information.

**In** a second possible implementation, the RAN device may determine the first measurement gap configuration information according to the measurement gap configuration information.

The measurement gap configuration information includes the period, the offset parameter, and the like of at least one measurement gap.

In a third possible implementation, the RAN device may determine the first measurement gap configuration information according to the PRS configuration information and the measurement gap configuration information.

In some embodiments, the at least one measurement gap configured by the measurement gap configuration information is at least a part of the at least one measurement gap configured by the first measurement gap configuration information. For example, in some implementations, the measurement gap configuration information includes configuration information of a measurement gap A and configuration information of a measurement gap B. The first measurement gap configuration information determined by the RAN device according to the first configuration information includes the configuration information of the measurement gap A, the configuration information of the measurement gap B, and configuration information of the measurement gaps C and D.

Optionally, the first measurement gap configuration information is used to configure at least one measurement gap for the terminal device, and each measurement gap corresponds to one measurement gap identifier, which is used to distinguish measurement gaps of different configurations.

In the embodiments of the present disclosure, after the RAN device determines the first measurement gap configuration information, the RAN device may further send the first measurement gap configuration information to the core network device.

In some embodiments, the RAN device sends the first measurement gap configuration information to the core network device through the NRPPa message.

Optionally, the NRPPa message may be an NRPPa request UE SRS activation response or an NRPPa PRS Configuration Response.

In embodiments of the present disclosure, pre-configuring the measurement gap for the terminal device includes: sending the first measurement gap configuration information to the terminal device.

In some embodiments, the RAN device sends the first measurement gap configuration information to the terminal device through an RRC message.

Optionally, the RRC message may be an RRC reconfiguration message.

In summary, by receiving first configuration information sent by a core network device, in which the first configuration information is used to determine first measurement gap configuration information, and the first measurement gap configuration information is used to configure a measurement gap for a terminal device, configuration information related to the measurement gap can be configured to the terminal device in advance, so that the terminal device can quickly request to activate or deactivate the measurement gap based on the measurement gap configured in advance, thereby effectively reducing a positioning delay and improving a positioning efficiency.

As shown in FIG. 3, FIG. 3 is a flowchart of a method for configuring a measurement gap according to an embodiment of the present disclosure. It should be noted that the method for configuring a measurement gap in this embodiment of the present disclosure is performed by an RAN device. Related descriptions of the RAN device are described above, which are not repeated herein. As shown in FIG. 3, the method may include the following steps.

At step 301, first configuration information sent by a core network device is received.

In this embodiment of the present disclosure, the step 301 may be implemented in any one method in the embodiments of the present disclosure, which is not limited here and not repeated here.

At step 302, first measurement gap configuration information is determined according to the first configuration information.

Optionally, the first measurement gap configuration information is used to configure at least one measurement gap, and each measurement gap corresponds to one measurement gap identifier, which is used to distinguish measurement gaps of different configurations.

The first measurement gap configuration information is used to request a target measurement gap for a terminal device from at least one measurement gap configured by the first measurement gap configuration information.

That is, before the terminal device needs to use the measurement gap, the first measurement gap configuration information is obtained to configure at least one measurement gap for the terminal device. When the terminal device needs to use the measurement gap, the target measurement gap used by the terminal device is requested from at least one pre-configured measurement gap.

In some embodiments, the terminal device may request the target measurement gap, and the core network device may also request the target measurement gap.

In some embodiments, the first configuration information includes at least one of PRS configuration information or measurement gap configuration information.

In a first possible implementation, the RAN device may determine the first measurement gap configuration information according to the PRS configuration information.

The PRS configuration information includes a related configuration of a PRS, for example, a type of the PRS, a period of the PRS, a resource position of the PRS, and the like. The RAN device may determine the first measurement gap configuration information for the terminal device according to received PRS configuration information.

**In** a second possible implementation, the RAN device may determine the first measurement gap configuration information according to the measurement gap configuration information.

The measurement gap configuration information includes the period, the offset parameter, and the like of at least one measurement gap.

In a third possible implementation, the RAN device may determine the first measurement gap configuration information according to the PRS configuration information and the measurement gap configuration information.

In some embodiments, the at least one measurement gap configured by the measurement gap configuration information is at least a part of the at least one measurement gap configured by the first measurement gap configuration information. For example, in some implementations, the measurement gap configuration information includes configuration information of a measurement gap A and configuration information of a measurement gap B. The first measurement gap configuration information determined by the RAN device according to the first configuration information includes the configuration information of the measurement gap A, the configuration information of the measurement gap B, and configuration information of the measurement gaps C and D.

At step 303, the first measurement gap configuration information is sent to the terminal device.

After determining the first measurement gap configuration information, the RAN device sends the first measurement gap configuration information to the terminal device, to configure the measurement gap for the terminal device.

In some embodiments, the RAN device sends the first measurement gap configuration information to the terminal device through an RRC message.

Optionally, the RRC message may be an RRC reconfiguration message.

At step 304, the first measurement gap configuration information is sent to the core network device.

After determining the first measurement gap configuration information, the RAN device may further send the first measurement gap configuration information to the core network device. Both the RAN device and the core network device can obtain the first measurement gap configuration information, to facilitate subsequent indication of the target measurement gap used by the terminal device.

In some embodiments, the RAN device sends the first measurement gap configuration information to the core network device through an NRPPa message.

Optionally, the NRPPa message may be an NRPPa Request UE SRS activation response or an NRPPa PRS Configuration Response.

In summary, by receiving first configuration information sent by a core network device, determining first measurement gap configuration information according to the first configuration information, sending the first measurement gap configuration information to a terminal device, and sending the first measurement gap configuration information to the core network device, configuration information related to the measurement gap can be configured to the terminal device in advance, so that the terminal device can quickly request to activate or deactivate the measurement gap based on the measurement gap configured in advance, thereby effectively reducing a positioning delay and improving a positioning efficiency.

As shown in FIG. 4, FIG. 4 is a flowchart of a method for configuring a measurement gap according to an embodiment of the present disclosure. It should be noted that the method for configuring a measurement gap in this embodiment of the present disclosure is performed by a core network device. The core network device is an entity for location estimation, such as an LMF, on a network side. As shown in FIG. 4, the method may include the following steps.

At step 401, first configuration information is sent to an RAN device, in which the first configuration information is configured to determine first measurement gap configuration information, and the first measurement gap configuration information is used to configure a measurement gap for a terminal device.

The RAN device is the RAN device in any embodiment of the present disclosure, which is not repeated herein.

The core network device sends the first configuration information to the RAN device, so that the RAN device may determine the first measurement gap configuration information for the terminal device according to the first configuration information, and configure the measurement gap for the terminal device.

The first measurement gap configuration information is used to request a target measurement gap for the terminal device from at least one measurement gap configured by the first measurement gap configuration information. The first measurement gap configuration information includes a period, an offset parameter, and the like of the at least one measurement gap.

In some embodiments, the first configuration information includes at least one of PRS configuration information or measurement gap configuration information.

That is, the RAN device may determine the first measurement gap configuration information according to at least one of the PRS configuration information or the measurement gap configuration information.

In a first possible implementation, the RAN device may determine the first measurement gap configuration information according to the PRS configuration information.

**In** a second possible implementation, the RAN device may determine the first measurement gap configuration information according to the measurement gap configuration information.

In a third possible implementation, the RAN device may determine the first measurement gap configuration information according to the PRS configuration information and the measurement gap configuration information.

The PRS configuration information includes a related configuration of a PRS, for example, a type of the PRS, a period of the PRS, a resource position of the PRS, and the like. The RAN device may determine the first measurement gap configuration information for the terminal device according to received PRS configuration information. The measurement gap configuration information includes the period, the offset parameter, and the like of at least one measurement gap.

In some embodiments, the at least one measurement gap configured by the measurement gap configuration information is at least a part of the at least one measurement gap configured by the first measurement gap configuration information. For example, in some implementations, the measurement gap configuration information includes configuration information of a measurement gap A and configuration information of a measurement gap B. The first measurement gap configuration information determined by the RAN device according to the first configuration information includes the configuration information of the measurement gap A, the configuration information of the measurement gap B, and configuration information of measurement gaps C and D.

Optionally, the first measurement gap configuration information is used to configure at least one measurement gap, and each measurement gap corresponds to one measurement gap identifier, which is used to distinguish measurement gaps of different configurations.

In some embodiments, the core network device sends the first configuration information to the RAN device through an NRPPa message.

Optionally, the NRPPa message may be an NRPPa PRS configuration request.

In embodiments of the present disclosure, the core network device may further receive the first measurement gap configuration information sent by the RAN device. In other words, after the RAN device determines the first measurement gap configuration information, the RAN device may further send the first measurement gap configuration information to the core network device.

In some embodiments, the core network device receives the first measurement gap configuration information through an NRPPa message sent by the RAN device.

Optionally, the NRPPa message may be an NRPPa Request UE SRS activation response or an NRPPa PRS Configuration Response.

In some embodiments, the core network device may further receive a request sent by the RAN device, and send the first configuration information to the RAN device according to the request.

Optionally, the request may be received through the NRPPa message sent by the RAN device.

In summary, by sending first configuration information to an RAN device, in which the first configuration information is used to determine first measurement gap configuration information, and the first measurement gap configuration information is used to configure a measurement gap for the terminal device, the RAN device can configure configuration information related to the measurement gap to the terminal device in advance, so that the terminal device can quickly request to activate or deactivate the measurement gap based on the measurement gap configured in advance, thereby effectively reducing a positioning delay and improving a positioning efficiency.

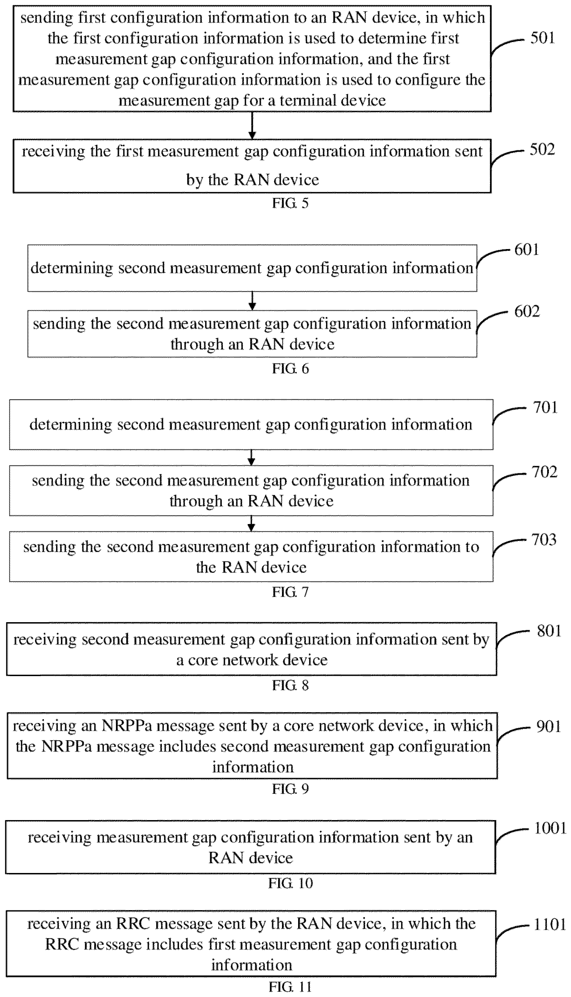

As shown in FIG. 5, FIG. 5 is a flowchart of a method for configuring a measurement gap according to an embodiment of the present disclosure. It should be noted that the method for configuring a measurement gap in this embodiment of the present disclosure is performed by a core network device. Related descriptions of the core network device are described above, which are not repeated herein. As shown in FIG. 5, the method may include the following steps.

At step 501, first configuration information is sent to an RAN device, in which the first configuration information is configured to determine first measurement gap configuration information, and the first measurement gap configuration information is used to configure a measurement gap for a terminal device.

The core network device sends the first configuration information to the RAN device, so that the RAN device may determine the first measurement gap configuration information for the terminal device according to the first configuration information.

The first measurement gap configuration information is used to request a target measurement gap for the terminal device from at least one measurement gap configured by the first measurement gap configuration information.

That is, before the terminal device needs to use the measurement gap, the first measurement gap configuration information is obtained to configure at least one measurement gap for the terminal device. When the terminal device needs to use the measurement gap, the target measurement gap used by the terminal device is requested from at least one pre-configured measurement gap.

In some embodiments, the terminal device may request the target measurement gap, and the core network device may also request the target measurement gap.

In some embodiments, the first configuration information includes at least one of PRS configuration information or second measurement gap configuration information.

That is, the RAN device may determine the first measurement gap configuration information according to at least one of the PRS configuration information or the second measurement gap configuration information.

In a first possible implementation, the RAN device may determine the first measurement gap configuration information according to the PRS configuration information.

**In** a second possible implementation, the RAN device may determine the first measurement gap configuration information according to the measurement gap configuration information.

In a third possible implementation, the RAN device may determine the first measurement gap configuration information according to the PRS configuration information and the measurement gap configuration information.

The PRS configuration information includes a related configuration of a PRS, for example, a type of the PRS, a period of the PRS, a resource position of the PRS, and the like. The RAN device may determine the first measurement gap configuration information for the terminal device according to received PRS configuration information. The second measurement gap configuration information includes a period, an offset parameter, and the like of the at least one measurement gap.

In some embodiments, the at least one measurement gap configured by the measurement gap configuration information is at least a part of the at least one measurement gap configured by the first measurement gap configuration information. For example, in some implementations, the measurement gap configuration information includes configuration information of a measurement gap A and configuration information of a measurement gap B. The first measurement gap configuration information determined by the RAN device according to the first configuration information includes the configuration information of the measurement gap A, the configuration information of the measurement gap B, and configuration information of measurement gaps C and D.

Optionally, the first measurement gap configuration information is used to configure at least one measurement gap, and each measurement gap corresponds to one measurement gap identifier, which is used to distinguish measurement gaps of different configurations.

In some embodiments, the core network device sends the first configuration information to the RAN device through an NRPPa message.

Optionally, the NRPPa message may be an NRPPa PRS configuration request.

At step 502, the first measurement gap configuration information sent by the RAN device is received.

After determining the first measurement gap configuration information, the RAN device may further send the first measurement gap configuration information to the core network device. Both the RAN device and the core network device can obtain the first measurement gap configuration information, to facilitate subsequent indication of a measurement gap used by the terminal device.

In some embodiments, the core network device receives the first measurement gap configuration information through an NRPPa message sent by the RAN device.

Optionally, the NRPPa message may be an NRPPa Request UE SRS activation response or an NRPPa PRS Configuration Response.

In summary, by sending first configuration information to an RAN device, in which the first configuration information is used to determine first measurement gap configuration information, and the first measurement gap configuration information is used to configure a measurement gap for a terminal device, and receiving the first measurement gap configuration information sent by the RAN device, the RAN device can configure configuration information related to the measurement gap to the terminal device in advance, so that the terminal device can quickly request to activate or deactivate the measurement gap based on the measurement gap configured in advance, thereby effectively reducing a positioning delay and improving a positioning efficiency.

As shown in FIG. 6, FIG. 6 is a flowchart of a method for configuring a measurement gap according to an embodiment of the present disclosure. It should be noted that the method for configuring a measurement gap in this embodiment of the present disclosure is performed by a core network device. Related descriptions of the core network device are described above, which are not repeated herein. As shown in FIG. 6, the method may include the following steps.

At step 601, second measurement gap configuration information is determined.

The second measurement gap configuration information is information used to configure a measurement gap for a terminal device, which is used to configure at least one measurement gap.

The second measurement gap configuration information is used to request a target measurement gap for the terminal device from the at least one measurement gap configured by the second measurement gap configuration information. The second measurement gap configuration information includes a period, an offset parameter, and the like of the at least one measurement gap.

The second measurement gap configuration information includes a period, an offset parameter, and the like of the at least one measurement gap.

In some implementations, the core network device may determine the first measurement gap configuration information according to at least one of PRS configuration information, a positioning precision, or a positioning delay requirement.

The PRS configuration information includes a related configuration of a PRS, for example, a type of the PRS, a period of the PRS, a resource position of the PRS, and the like.

In a first possible implementation, the core network device determines the second measurement gap configuration information according to the PRS configuration information.

The core network device may determine the second measurement gap configuration information for the terminal device according to the PRS configuration information, such as the type of the PRS, the period of the PRS, the resource position of the PRS, and the like.

In a second possible implementation, the core network device determines the second measurement gap configuration information based on the positioning precision.

The core network device may determine the second measurement gap configuration information for the terminal device according to the positioning precision requirement of the terminal device.

In a third possible implementation, the core network device determines the second measurement gap configuration information according to the positioning delay requirement.

The core network device may determine the second measurement gap configuration information for the terminal device according to the positioning delay requirement of the terminal device.

In a fourth possible implementation, the core network device determines the second measurement gap configuration information according to the PRS configuration information and the positioning precision.

**In** a fifth possible implementation, the core network device determines the second measurement gap configuration information according to the PRS configuration information and the positioning delay requirement.

**In** a sixth possible implementation, the core network device determines the second measurement gap configuration information according to the positioning precision and the positioning delay requirement.

**In** a seventh possible implementation, the core network device determines the second measurement gap configuration information according to the PRS configuration information, the positioning precision, and the positioning delay requirement.

At step 602, the second measurement gap configuration information is sent through an RAN device.

Since the core network device cannot directly perform communication interaction with the terminal device, the second measurement gap configuration information determined by the core network device needs to be sent to the terminal device through the RAN device, to configure the measurement gap for the terminal device.

In some embodiments, the core network device sends the second measurement gap configuration information to the terminal device through an LPP message sent by the RAN device.

Optionally, the LPP message may be at least one of LPP provide assistance data and LPP Request location information.

In embodiments of the present disclosure, the core network device may further send the second measurement gap configuration information to be sent to the terminal device to the RAN device.

In some embodiments, the core network device sends the second measurement gap configuration information to the RAN device through an NRPPa message.

Optionally, the NRPPa message may be an NRPPa positioning information request, an NRPPa request UE SRS activation, or another customized NRPPa message.

In summary, by determining second measurement gap configuration information and sending the second measurement gap configuration information through an RAN device, configuration information related to the measurement gap can be configured to the terminal device in advance, so that the terminal device can quickly request to activate or deactivate the measurement gap based on the measurement gap configured in advance, thereby effectively reducing a positioning delay and improving a positioning efficiency.

As shown in FIG. 7, FIG. 7 is a flowchart of a method for configuring a measurement gap according to an embodiment of the present disclosure. It should be noted that the method for configuring a measurement gap in this embodiment of the present disclosure is performed by a core network device. Related descriptions of the core network device are described above, which are not repeated herein. As shown in FIG. 7, the method may include the following steps.

At step 701, second measurement gap configuration information is determined.

At step 702, the second measurement gap configuration information is sent through an RAN device.

In this embodiment of the present disclosure, the steps 701 and 702 may be implemented in any one method in the embodiments of the present disclosure, which are not limited here and not repeated here.

At step 703, the second measurement gap configuration information is sent to the RAN device.

After determining the second measurement gap configuration information, the core network device may further send the second measurement gap configuration information to the RAN device. Both the RAN device and the core network device can obtain the second measurement gap configuration information, to facilitate subsequent indication of a measurement gap used by a terminal device.

In some embodiments, the core network device sends the second measurement gap configuration information to the RAN device through an NRPPa message.

Optionally, the NRPPa message may be an NRPPa positioning information request, an NRPPa request UE SRS activation, or another customized NRPPa message.

In summary, by determining second measurement gap configuration information, sending the second measurement gap configuration information through an RAN device, and sending the first measurement gap configuration information to the RAN device, configuration information related to the measurement gap can be configured to the terminal device in advance, so that the terminal device can quickly request to activate or deactivate the measurement gap based on the measurement gap configured in advance, thereby effectively reducing a positioning delay and improving a positioning efficiency.

As shown in FIG. 8, FIG. 8 is a flowchart of a method for configuring a measurement gap according to an embodiment of the present disclosure. It should be noted that the method for configuring a measurement gap in this embodiment of the present disclosure is performed by an RAN device. Related descriptions of the RAN device are described above, which are not repeated herein. As shown in FIG. 8, the method may include the following steps.

At step 801, second measurement gap configuration information sent by a core network device is received.

The second measurement gap configuration information is determined by the core network device and used to configure at least one measurement gap for a terminal device.

The second measurement gap configuration information is used to request a target measurement gap for the terminal device from the at least one measurement gap configured by the second measurement gap configuration information. The second measurement gap configuration information includes a period, an offset parameter, and the like of the at least one measurement gap.

After determining the second measurement gap configuration information, the core network device may further send the second measurement gap configuration information to the RAN device. Both the RAN device and the core network device can obtain the second measurement gap configuration information, to facilitate subsequent indication of the measurement gap used by the terminal device.

In some embodiments, the core network device sends the second measurement gap configuration information to the RAN device through an NRPPa message.

Optionally, the NRPPa message may be an NRPPa positioning information request, an NRPPa request UE SRS activation, or another customized NRPPa message.

In summary, by receiving second measurement gap configuration information sent by a core network device, configuration information related to the measurement gap can be configured to a terminal device in advance, so that the terminal device can quickly request to activate or deactivate the measurement gap based on the measurement gap configured in advance, thereby effectively reducing a positioning delay and improving a positioning efficiency.

As shown in FIG. 9, FIG. 9 is a flowchart of a method for configuring a measurement gap according to an embodiment of the present disclosure. It should be noted that the method for configuring a measurement gap in this embodiment of the present disclosure is performed by an RAN device. Related descriptions of the RAN device are described above, which are not repeated herein. As shown in FIG. 9, the method may include the following steps.

At step 901, an NRPPa message sent by a core network device is received, in which the NRPPa message includes second measurement gap configuration information.

The second measurement gap configuration information is determined by the core network device and used to pre-configure a measurement gap for a terminal device.

The second measurement gap configuration information is used to request a target measurement gap for the terminal device from at least one measurement gap configured by the second measurement gap configuration information. The second measurement gap configuration information includes a period, an offset parameter, and the like of the at least one measurement gap.

That is, before the terminal device needs to use the measurement gap, the second measurement gap configuration information is obtained to configure at least one measurement gap for the terminal device. When the terminal device needs to use the measurement gap, the target measurement gap used by the terminal device is requested from at least one pre-configured measurement gap.

In some embodiments, the terminal device may request the target measurement gap, and the core network device may also request the target measurement gap.

After determining the second measurement gap configuration information, the core network device may further send the second measurement gap configuration information to the RAN device. Both the RAN device and the core network device can obtain the second measurement gap configuration information, to facilitate subsequent indication of the measurement gap used by the terminal device.

Optionally, the NRPPa message may be an NRPPa positioning information request, an NRPPa request UE SRS activation, or another customized NRPPa message.

In summary, by receiving an NRPPa message sent by a core network device, in which the NRPPa message includes second measurement gap configuration information, configuration information related to the measurement gap can be configured to a terminal device in advance, so that the terminal device can quickly request to activate or deactivate the measurement gap based on the measurement gap configured in advance, thereby effectively reducing a positioning delay and improving a positioning efficiency.

As shown in FIG. 10, FIG. 10 is a flowchart of a method for configuring a measurement gap according to an embodiment of the present disclosure. It should be noted that the method for configuring a measurement gap in this embodiment of the present disclosure is performed by a terminal device. As shown in FIG. 10, the method may include the following steps.

At step 1001, measurement gap configuration information sent by an RAN device is received.

The measurement gap configuration information is determined by the RAN device or a core network device and used to configure a measurement gap for the terminal device. The measurement gap configuration information is configured to configure at least one measurement gap.

The measurement gap configuration information is used to request a target measurement gap for the terminal device from the at least one measurement gap configured by the measurement gap configuration information. The measurement gap configuration information includes a period, an offset parameter, and the like of the at least one measurement gap.

The terminal device receives the measurement gap configuration information sent by the RAN device, and may request the access network device to activate or deactivate the measurement gap for the terminal device according to the measurement gap configuration information.

In embodiments of present disclosure, the measurement gap configuration information determined by the RAN device is first measurement gap configuration information, the measurement gap configuration information determined by the core network device is second measurement gap configuration information. That is, both the RAN device and the core network device can configure the measurement gap for the terminal device.

It may be understood that since the core network device cannot directly perform communication interaction with the terminal device, the second measurement gap configuration information determined by the core network device needs to be sent to the terminal device through the RAN device.

It may be understood that the method for pre-configuring the measurement gap for the terminal device by the RAN device is described in the embodiments as shown in FIGS. 2 to 5, and the method for pre-configuring the measurement gap for the terminal device by the core network device is described in the embodiments as shown in FIGS. 6 to 9, which are not repeated here.

It should be noted that the first measurement gap configuration information determined by the RAN device and the second measurement gap configuration information determined by the core network may be the same or different.

In embodiments of the present disclosure, in response to the terminal device receiving the first measurement gap configuration information sent by the RAN device and the second measurement gap configuration information sent by the core network device through the RAN device, and the first measurement gap configuration information and the second measurement gap configuration information being different, the terminal device configures the measurement gap according to the first measurement gap configuration information sent by the RAN device.

That is, if the access network device and the core network device both configure the measurement gap for the terminal device and the measurement gap configuration information configured by the access network device is different from the measurement gap configuration information configured by the core network device, the terminal device configures the measurement gap according to the first measurement gap configuration information determined by the RAN device.

In some embodiments, the measurement gap configuration information is the first measurement gap configuration information determined by the RAN device, and receiving the first measurement gap configuration information sent by the RAN device includes:
receiving an RRC message sent by the RAN device, in which the RRC message includes the first measurement gap configuration information.

Optionally, the RRC message may be an RRC reconfiguration message.

In some embodiments, the measurement gap configuration information is the second measurement gap configuration information determined by the core network device, and the receiving measurement gap configuration information sent by the RAN device includes:
receiving an LPP message sent by the RAN device, in which the LPP message includes the second measurement gap configuration information.

Optionally, the LPP message may be at least one of LPP provide assistance data or LPP Request location information.

In summary, by receiving measurement gap configuration information sent by an RAN device, configuration information related to the measurement gap can be configured to a terminal device in advance, so that the terminal device can quickly request to activate or deactivate the measurement gap based on the measurement gap configured in advance, thereby effectively reducing a positioning delay and improving a positioning efficiency.

As shown in FIG. 11, FIG. 11 is a flowchart of a method for configuring a measurement gap according to an embodiment of the present disclosure. It should be noted that the method for configuring a measurement gap in this embodiment of the present disclosure is performed by a terminal device. As shown in FIG. 11, the method may include the following steps.

At step 1101, an RRC message sent by an RAN device is received, in which, the RRC message includes first measurement gap configuration information.

The first measurement gap configuration information is determined by the RAN device and used to pre-configure a measurement gap for the terminal device. The first measurement gap configuration information is used to configure at least one measurement gap.

The first measurement gap configuration information is used to request a target measurement gap for the terminal device from at least one measurement gap configured by the first measurement gap configuration information. The first measurement gap configuration information includes a period, an offset parameter, and the like of the at least one measurement gap.

That is, before the terminal device needs to use the measurement gap, the first measurement gap configuration information is obtained to configure at least one measurement gap for the terminal device. When the terminal device needs to use the measurement gap, the target measurement gap used by the terminal device is requested from at least one pre-configured measurement gap.

In some embodiments, the terminal device may request the target measurement gap, and the core network device may also request the target measurement gap.

The terminal device receives the first measurement gap configuration information through the RRC message sent by the RAN device.

Optionally, the RRC message may be an RRC reconfiguration message.

In summary, by receiving an RRC message sent by an RAN device, in which the RRC message includes first measurement gap configuration information, configuration information related to a measurement gap can be configured to a terminal device in advance, so that the terminal device can quickly request to activate or deactivate the measurement gap based on the measurement gap configured in advance, thereby effectively reducing a positioning delay and improving a positioning efficiency.

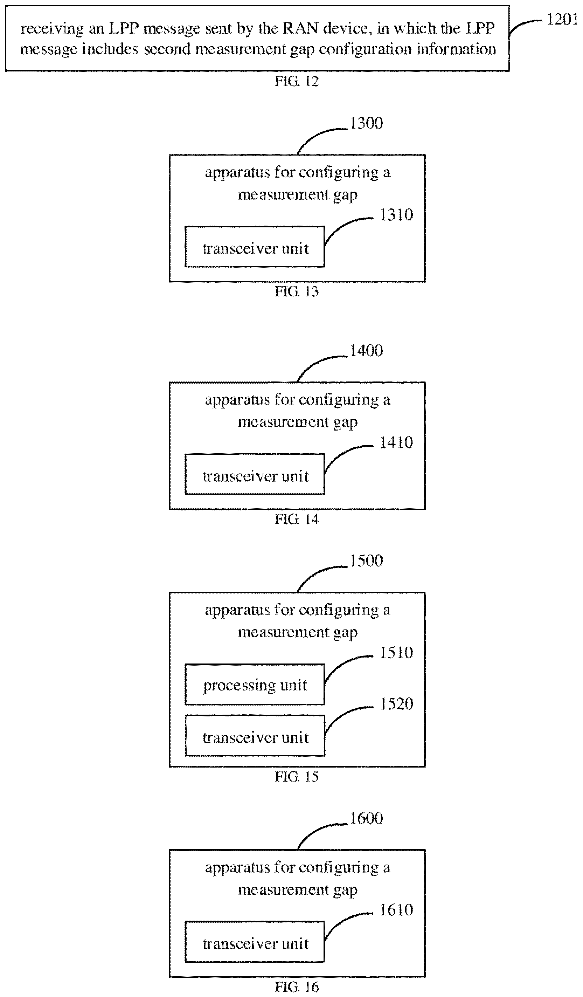

As shown in FIG. 12, FIG. 12 is a flowchart of a method for configuring a measurement gap according to an embodiment of the present disclosure. It should be noted that the method for configuring a measurement gap in this embodiment of the present disclosure is performed by a terminal device. As shown in FIG. 12, the method may include the following steps.

At step 1201, an LPP message sent by an RAN device is received, the LPP message includes second measurement gap configuration information.

The second measurement gap configuration information is determined by a core network device and used to pre-configure a measurement gap for the terminal device. The second measurement gap configuration information is used to configure at least one measurement gap.

The second measurement gap configuration information is used to request a target measurement gap for the terminal device from at least one measurement gap configured by the second measurement gap configuration information. The second measurement gap configuration information includes a period, an offset parameter, and the like of the at least one measurement gap.

That is, before the terminal device needs to use the measurement gap, the second measurement gap configuration information is obtained to configure at least one measurement gap for the terminal device. When the terminal device needs to use the measurement gap, the target measurement gap used by the terminal device is requested from at least one pre-configured measurement gap.

In some embodiments, the terminal device may request the target measurement gap, and the core network device may also request the target measurement gap.

It may be understood that since the core network device cannot directly perform communication interaction with the terminal device, the second measurement gap configuration information determined by the core network device needs to be sent to the terminal device through the RAN device.

The terminal device receives the second measurement gap configuration information sent by the core network device through the LPP message sent by the RAN device.

Optionally, the LPP message may be at least one of LPP provide assistance data or LPP Request location information.

In summary, by receiving an LPP message sent by an RAN device, in which the LPP message includes second measurement gap configuration information, configuration information related to a measurement gap can be configured to a terminal device in advance, so that the terminal device can quickly request to activate or deactivate the measurement gap based on the measurement gap configured in advance, thereby effectively reducing a positioning delay and improving a positioning efficiency.

Corresponding to the method for configuring a measurement gap provided in the embodiments, the present disclosure further provides an apparatus for configuring a measurement gap. Since the apparatus for configuring a measurement gap provided in the embodiments of the present disclosure corresponds to the method provided in the several foregoing embodiments, implementations of the method for configuring a measurement gap are also applicable to the apparatus for configuring a measurement gap provided in the following embodiments, which are not described in detail in the following embodiments.

Referring to FIG. 13, FIG. 13 is a block diagram of an apparatus for configuring a measurement gap according to an embodiment of the present disclosure.

As shown in FIG. 13, the apparatus 1300 for configuring a measurement gap includes: a transceiver unit 1310.

The transceiver unit 1310 is configured to receive first configuration information sent by a core network device.

The first configuration information is configured to determine first measurement gap configuration information, and the first measurement gap configuration information is used to configure a measurement gap for a terminal device.

Optionally, the transceiver unit 1310 is further configured to send the first measurement gap configuration information to the core network device.

Optionally, the first configuration information includes at least one of PRS configuration information or measurement gap configuration information.

Optionally, the transceiver unit 1310 is further configured to send an RRC message to the terminal device. The RRC message includes the first measurement gap configuration information.

Optionally, the transceiver unit 1310 is specifically configured to send an NRPPa message to the core network device. The NRPPa message includes the first measurement gap configuration information.

Optionally, the transceiver unit 1310 is specifically configured to receive an NRPPa message sent by the core network device. The NRPPa message includes the first configuration information.

In this embodiment, an apparatus for configuring a measurement gap may receive first configuration information sent by a core network device, in which the first configuration information is used to determine first measurement gap configuration information, and the first measurement gap configuration information is used to configure a measurement gap for a terminal device, so that configuration information related to the measurement gap is configured to the terminal device in advance, and the terminal device can quickly request to activate or deactivate the measurement gap based on the measurement gap configured in advance, thereby effectively reducing a positioning delay and improving a positioning efficiency.

Referring to FIG. 14, FIG. 14 is a block diagram of an apparatus for configuring a measurement gap according to an embodiment of the present disclosure.

As shown in FIG. 14, the apparatus 1400 for configuring a measurement gap includes: a transceiver unit 1410.

The transceiver unit 1410 is configured to send first configuration information to an RAN device.

The first configuration information is used to determine first measurement gap configuration information, and the first measurement gap configuration information is used to configure a measurement gap for a terminal device.

Optionally, the transceiver unit 1410 is further configured to receive the first measurement gap configuration information sent by the RAN device.

Optionally, the first configuration information includes at least one of PRS configuration information or second measurement gap configuration information.

Optionally, the transceiver unit 1410 is specifically configured to receive an NRPPa message sent by the RAN device. The NRPPa message includes the first measurement gap configuration information.

Optionally, the transceiver unit 1410 is specifically configured to send an NRPPa message to the RAN device. The message includes the first configuration information.

In this embodiment, an apparatus for configuring a measurement gap may send first configuration information to an RAN device, in which the first configuration information is used to determine first measurement gap configuration information, and the first measurement gap configuration information is used to configure a measurement gap for a terminal device, so that the RAN device can configure configuration information related to the measurement gap to the terminal device in advance, and the terminal device can quickly request to activate or deactivate the measurement gap based on the measurement gap configured in advance, thereby effectively reducing a positioning delay and improving a positioning efficiency.

Referring to FIG. 15, FIG. 15 is a block diagram of an apparatus for configuring a measurement gap according to an embodiment of the present disclosure.

As shown in FIG. 15, the apparatus 1500 for configuring a measurement gap includes: a processing unit 1510 and a transceiver unit 1520.

The processing unit 1510 is configured to determine second measurement gap configuration information.

The transceiver unit 1520 is configured to send the second measurement gap configuration information through an RAN device, in which the second measurement gap configuration information is used to configure a measurement gap for a terminal device.

Optionally, the transceiver unit 1520 is further configured to send the second measurement gap configuration information to the RAN device.

Optionally, the processing unit 1510 is specifically configured to determine the second measurement gap configuration information according to at least one of PRS configuration information, a positioning precision, and a positioning delay requirement.

Optionally, the transceiver unit 1520 is specifically configured to send an LPP message through the RAN device. The LPP message includes the second measurement gap configuration information.

Optionally, the transceiver unit 1520 is specifically configured to send an NRPPa message to the RAN device. The NRPPa message includes the second measurement gap configuration information.

In this embodiment, an apparatus for configuring a measurement gap may determine second measurement gap configuration information and send the second measurement gap configuration information through an RAN device, so that configuration information related to the measurement gap can be configured to a terminal device in advance, and the terminal device can quickly request to activate or deactivate the measurement gap based on the measurement gap configured in advance, thereby effectively reducing a positioning delay and improving a positioning efficiency.

Referring to FIG. 16, FIG. 16 is a block diagram of an apparatus for configuring a measurement gap according to an embodiment of the present disclosure.

As shown in FIG. 16, the apparatus 1600 for configuring a measurement gap includes: a transceiver unit 1610.

The transceiver unit 1610 is configured to receive second measurement gap configuration information sent by a core network device, in which the second measurement gap configuration information is used to configure a measurement gap for a terminal device.

Optionally, the transceiver unit 1610 is specifically configured to receive an NRPPa message sent by the core network device. The NRPPa message includes the second measurement gap configuration information.

In this embodiment, an apparatus for configuring a measurement gap may receive second measurement gap configuration information sent by a core network device, configuration information related to the measurement gap can be configured to a terminal device in advance, so that the terminal device can quickly request to activate or deactivate the measurement gap based on the measurement gap configured in advance, thereby effectively reducing a positioning delay and improving a positioning efficiency.

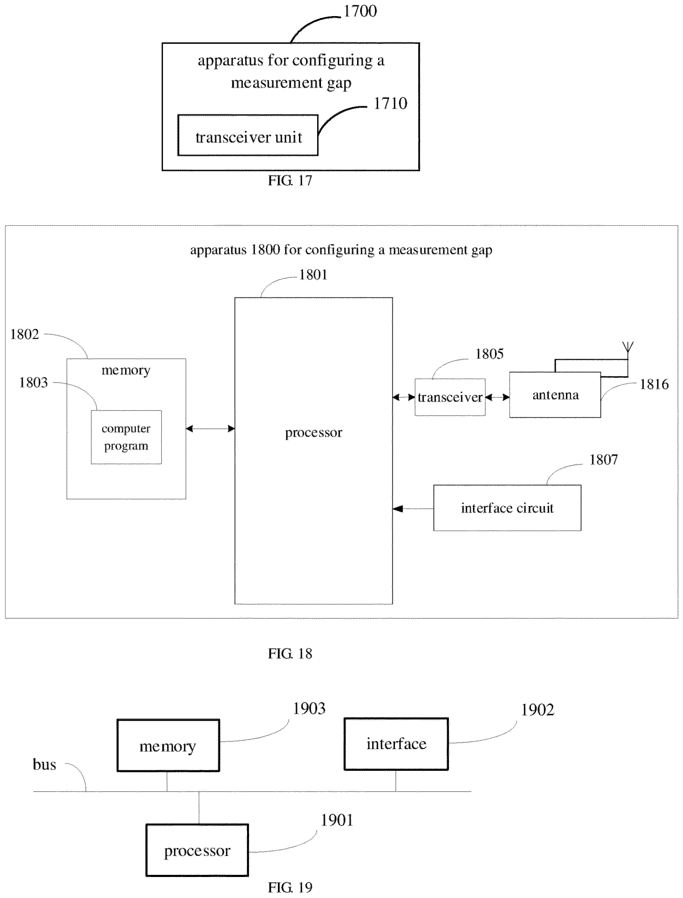

Referring to FIG. 17, FIG. 17 is a block diagram of an apparatus for configuring a measurement gap according to an embodiment of the present disclosure.

As shown in FIG. 17, the apparatus 1700 for configuring a measurement gap includes: a transceiver unit 1710.

The transceiver unit 1710 is configured to receive measurement gap configuration information sent by an RAN device, in which the measurement gap configuration information is used to configure a measurement gap for a terminal device.

Optionally, the measurement gap configuration information is first measurement gap configuration information determined by the RAN device. The transceiver unit 1710 is specifically configured to receive an RRC message sent by the RAN device. The RRC message includes the first measurement gap configuration information.

Optionally, the measurement gap configuration information is second measurement gap configuration information determined by a core network device. The transceiver unit 1710 is specifically configured to receive an LPP message sent by the RAN device. The LPP message includes the second measurement gap configuration information.

In this embodiment, an apparatus for configuring a measurement gap may receive measurement gap configuration information sent by an RAN device, configuration information related to the measurement gap can be configured to a terminal device in advance, so that the terminal device can quickly request to activate or deactivate the measurement gap based on the measurement gap configured in advance, thereby effectively reducing a positioning delay and improving a positioning efficiency.

In order to implement the foregoing embodiments, an embodiment of the present disclosure further provides a communication device, including a processor and a memory. The memory stores a computer program, and the processor executes the computer program stored in the memory, so that the device performs the methods of the embodiments shown in FIGS. 2 to 3, or performs the methods of the embodiments shown in FIGS. 8 to 9.

In order to implement the foregoing embodiments, an embodiment of the present disclosure further provides a communication device, including a processor and a memory. The memory stores a computer program, and the processor executes the computer program stored in the memory, so that the device performs the methods of the embodiments shown in FIGS. 4 to 5, or performs the methods of the embodiments shown in FIGS. 6 to 7.

In order to implement the foregoing embodiments, an embodiment of the present disclosure further provides a communication device, including a processor and a memory. The memory stores a computer program, and the processor executes the computer program stored in the memory, so that the device performs the methods of the embodiments shown in FIGS. 10 to 12.

In order to implement the foregoing embodiments, an embodiment of the present disclosure further provides a communication device, including a processor and an interface circuit. The interface circuit is configured to receive code instructions and transmit the code instructions to the processor, and the processor is configured to run the code instructions to perform the methods of the embodiments shown in FIGS. 2 to 3, or perform the methods of the embodiments shown in FIGS. 8 to 9.

In order to implement the foregoing embodiments, an embodiment of the present disclosure further provides a communication device, including a processor and an interface circuit. The interface circuit is configured to receive code instructions and transmit the code instructions to the processor, and the processor is configured to run the code instructions to perform the methods of the embodiments shown in FIGS. 4 to 5, or perform the methods of the embodiments shown in FIGS. 6 to 7.

In order to implement the foregoing embodiments, an embodiment of the present disclosure further provides a communications device, including a processor and an interface circuit. The interface circuit is configured to receive code instructions and transmit the code instructions to the processor, and the processor is configured to run the code instructions to perform the methods of the embodiments shown in FIGS. 10 to 12.

Referring to FIG. 18, FIG. 18 is a block diagram of an apparatus for configuring a measurement gap according to another embodiment of the present disclosure. The apparatus 1800 for configuring a measurement gap may be a network device, or may be a terminal device, or may be a chip, a chip system, or a processor that supports the network device to implement the above methods, or may be a chip, a chip system, or a processor that supports the terminal device to implement the above methods. The apparatus may be used to implement the methods described in the foregoing method embodiments, and reference will be made to the description in the foregoing method embodiments.

The apparatus 1800 for configuring a measurement gap may include one or more processors 1801. The processor 1801 may be a general-purpose processor or a dedicated processor or the like. For example, it may be a baseband processor or a central processing unit. The baseband processor may be configured to process a communication protocol and communication data, and the central processing unit may be configured to control the apparatus for configuring a measurement gap (for example, a base station, a baseband chip, a terminal device, a terminal device chip, a distributed unit (DU), or a centralized unit (CU)), execute a computer program, and process data of a computer program.

Optionally, the apparatus 1800 for configuring a measurement gap may further include one or more memories 1802 on which a computer program 1803 may be stored, and the processor 1801 executes the computer program 1803, so that the apparatus 1800 for configuring a measurement gap executes the methods described in the foregoing method embodiments. The computer program 1803 may be cured in the processor 1801, and in this case, the processor 1801 may be implemented by hardware.

Optionally, the memory 1802 may further store data. The apparatus 1800 for configuring a measurement gap and the memory 1802 may be separately disposed, or may be integrated together.

Optionally, the apparatus 1800 for configuring a measurement gap may further include a transceiver 1805 and an antenna 1806. The transceiver 1805 may be referred to as a transceiver unit, a transceiver, or a transceiver circuit, and is configured to implement a transceiver function. The transceiver 1805 may include a receiver and a transmitter, and the receiver may be referred to as a receiver or a receiving circuit, for implementing a receiving function; and the transmitter may be referred to as a transmitter or a transmitting circuit, for implementing a transmitting function.

Optionally, the apparatus 1800 for configuring a measurement gap may further include one or more interface circuits 1807. The interface circuit 1807 is configured to receive code instructions and transmit the code instructions to the processor 1801. The processor 1801 runs the code instructions to cause the apparatus 1800 for configuring a measurement gap to perform the methods described in the foregoing method embodiments.

In an implementation, the processor 1801 may include a transceiver for implementing the receiving and transmitting function. For example, the transceiver may be a transceiver circuit, an interface, or an interface circuit. The transceiver circuit, the interface, or the interface circuit for implementing the receiving and transmitting function may be separate or integrated together. The transceiver circuit, the interface, or the interface circuit may be used for reading and writing code/data, or the transceiver circuit, the interface, or the interface circuit may be used for signal transmission or transmission.

In an implementation, the apparatus 1800 for configuring a measurement gap may include a circuit, and the circuit may implement the sending, receiving or communicating function in the preceding method embodiments. The processor and the transceiver described in the present disclosure may be implemented on an integrated circuit (IC), an analog IC, a radio frequency integrated circuit RFIC, a mixed signal IC, an application specific integrated circuit (ASIC), a printed circuit board (PCB), an electronic device, etc. The processor and the transceiver can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The apparatus for configuring a measurement gap in the foregoing embodiments may be a network device or a terminal device, but the scope of the apparatus for configuring a measurement gap described in the present disclosure is not limited thereto, and the structure of the apparatus for configuring a measurement gap may not be limited by FIGS. 13 to 17. The apparatus for configuring a measurement gap may be a stand-alone device or may be part of a larger device. For example, the apparatus for configuring a measurement gap may be:
(1) a stand-alone IC, a chip, a chip system or a subsystem;
(2) a collection of ICs including one or more ICs, optionally, the collection of ICs may also include storage components for storing data and computer programs;
(3) an ASIC, such as a modem;
(4) modules that may be embedded in other devices;
(5) a receiver, a terminal device, a smart terminal device, a cellular phone, a wireless device, a handheld machine, a mobile unit, an in-vehicle device, a network device, a cloud device, an artificial intelligence device, and the like; and
(6) Others.

The case where the apparatus for configuring a measurement gap may be a chip or a chip system is described with reference to the schematic structure of the chip shown in FIG. 19. The chip shown in FIG. 19 includes a processor 1901 and an interface 1902. There may be one or more processors 1901, and there may be more than one interface 1902.

In the case that the chip is configured to implement a function of the network device in the embodiments of the present disclosure:
the interface 1902 is configured to receive code instructions and transmit the code instructions to the processor; and
the processor 1901 is configured to run the code instructions to perform the methods as shown in FIGS. 2 to 3, or perform the methods as shown in FIGS. 8 to 9, or perform the method as shown in FIGS. 4 to 5, or perform the methods as shown in FIGS. 6 to 7.

In the case that a chip is configured to implement a function of the terminal device in the embodiments of the present disclosure:
the interface 1902 is configured to receive code instructions and transmit the code instructions to the processor; and
the processor 1901 is configured to run the code instructions to perform the methods as shown in FIGS. 10 to 12.

Alternatively, the chip further includes a memory 1903, and the memory 1903 is configured to store necessary computer programs and data.

It is understood by those skilled in the art that various illustrative logical blocks and steps listed in the embodiments of the present disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be understood as beyond the scope of protection of the embodiments of the present disclosure.

The embodiments of the present disclosure further provide a communication system. The system includes an apparatus for configuring a measurement gap serving as a terminal device and an apparatus for configuring a measurement gap serving as a network device in the foregoing embodiment described with reference to FIGS. 12 to 17, or the system includes an apparatus for configuring a measurement gap serving as a terminal device and an apparatus for configuring a measurement gap serving as a network device in the foregoing embodiment described with reference to FIG. 18.

The present disclosure further provides a readable storage medium having stored thereon instructions that, when executed by a computer, implement the functions of any of the foregoing method embodiments.

The present disclosure further provides a computer program product that, when executed by a computer, implements the functions of any of the foregoing method embodiments.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer programs on the computer, all or part of processes or functions described in the embodiments of the present disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs) or wireless manner (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art can understand that the first, second, and other various numerical numbers involved in the present disclosure are only described for the convenience of differentiation, and are not used to limit the scope of the embodiments of the present disclosure, or used to indicate the order of precedence.

The term "at least one" in the present disclosure may also be described as one or more, and the term "more than one" may be two, three, four, or more, which is not limited in the present disclosure. In the embodiments of the present disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondence shown in tables in the present disclosure may be configured, or may be predefined. Value of information in each table is merely an example, and may be configured as other values, which is not limited in the present disclosure. When a correspondence of the information and parameters is configured, it is not necessary to configure all correspondences shown in the tables. For example, in the tables in the present disclosure, the correspondence shown in some rows may also be not configured. For another example, appropriate deformation adjustment may be performed based on the foregoing tables, for example, splitting, merging, and the like. Names of titles shown in the foregoing tables may also use other names that may be understood by the communication apparatus, and values or representations of the parameters may also be other values or representations that may be understood by the communication apparatus. When the foregoing tables are implemented, other data structures may be used. For example, an array, a queue, a container, a stack, a linear table, a pointer, a linked list, a tree, a graph, a structure, a class, a heap, a hash table and the like may be used.

The term "predefine" in this disclosure may be understood as define, define in advance, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above can be referred to the corresponding processes in the preceding method embodiments, and will not be repeated herein.

It should be understood that, various forms of procedures shown above may be configured to reorder, add or delete blocks. For example, blocks described in the present disclosure may be executed in parallel, sequentially, or in a different order, as long as the desired result of the technical solution disclosed in the present disclosure may be achieved, which will not be limited herein.

The above specific implementations do not constitute a limitation on the protection scope of the present disclosure. Those skilled in the art should understand that various modifications, combinations, sub-combinations and substitutions may be made according to design requirements and other factors. Any modification, equivalent replacement, improvement, etc., made within the spirit and principle of embodiments of the present disclosure shall be included within the protection scope of embodiments of the present disclosure.

## Claims

1. A method for configuring a measurement gap, performed by a radio access network (RAN) device, comprising:
receiving first configuration information sent by a core network device;
wherein the first configuration information is configured to determine first measurement gap configuration information, and the first measurement gap configuration information is used to configure a measurement gap for a terminal device.

2. The method of claim 1, further comprising:
sending the first measurement gap configuration information to the core network device.

3. The method of claim 1, wherein the first configuration information comprises at least one of positioning reference signal (PRS) configuration information or measurement gap configuration information.

4. The method of claim 1, further comprising:
sending a radio resource control (RRC) message to the terminal device, wherein the RRC message comprises the first measurement gap configuration information.

5. The method of claim 2, wherein sending the first measurement gap configuration information to the core network device comprises:
sending a new radio positioning protocol A (NRPPa) message to the core network device, wherein the NRPPa message comprises the first measurement gap configuration information.

6. The method of claim 1, wherein receiving the first configuration information sent by the core network device comprises:
receiving an NRPPa message sent by the core network device, wherein the NRPPa message comprises the first configuration information.

7. A method for configuring a measurement gap, performed by a radio access network (RAN) device, comprising:
sending first configuration information to a radio access network (RAN) device;
wherein the first configuration information is configured to determine first measurement gap configuration information, and the first measurement gap configuration information is used to configure a measurement gap for a terminal device.

8. The method of claim 7, further comprising:
receiving the first measurement gap configuration information sent by the RAN device.

9. The method of claim 7, wherein the first configuration information comprises at least one of positioning reference signal (PRS) configuration information or measurement gap configuration information.

10. The method of claim 8, wherein receiving the first measurement gap configuration information sent by the RAN device comprises:
receiving a new radio positioning protocol A (NRPPa) message sent by the RAN device, wherein the NRPPa message comprises the first measurement gap configuration information.

11. The method of claim 7, wherein sending the first configuration information to the RAN device comprises:
sending an NRPPa message to the RAN device, wherein the NRPPa message comprises the first configuration information.

12. A method for configuring a measurement gap, performed by a core network device, comprising:
determining second measurement gap configuration information; and
sending the second measurement gap configuration information through a radio access network (RAN) device, wherein the second measurement gap configuration information is used to configure a measurement gap for a terminal device.

13. The method of claim 12, further comprising:
sending the second measurement gap configuration information to the RAN device.

14. The method of claim 12, wherein determining the second measurement gap configuration information comprises:
determining the second measurement gap configuration information based on at least one of positioning reference signal (PRS) configuration information, a positioning precision, or a positioning delay requirement.

15. The method of claim 12, wherein sending the second measurement gap configuration information to the terminal device comprises:
sending a long term evolution positioning protocol (LPP) message through the RAN device, wherein the LPP message comprises the second measurement gap configuration information.

16. The method of claim 13, wherein sending the second measurement gap configuration information to the RAN device comprises:
sending a new radio positioning protocol A (NRPPa) message to the RAN device, wherein the NRPPa message comprises the second measurement gap configuration information.

17. A method for configuring a measurement gap, performed by a radio access network (RAN) device, comprising:
receiving second measurement gap configuration information sent by a core network device, wherein the second measurement gap configuration information is used to configure a measurement gap for a terminal device.

18. The method of claim 17, wherein receiving the second measurement gap configuration information sent by the core network device comprises:
receiving a new radio positioning protocol A (NRPPa) message sent by the core network device, wherein the NRPPa message comprises the second measurement gap configuration information.

19. An apparatus for configuring a measurement gap, comprising:
a transceiver unit, configured to receive first configuration information sent by a core network device;
wherein the first configuration information is configured to determine first measurement gap configuration information, and the first measurement gap configuration information is used to configure a measurement gap for a terminal device.

20. The apparatus of claim 19, wherein the transceiver unit is further configured to:
send the first measurement gap configuration information to the core network device.

21. The apparatus of claim 20, wherein the first configuration information comprises at least one of positioning reference signal (PRS) configuration information or measurement gap configuration information.

22. The apparatus of claim 19, wherein the transceiver unit is further configured to:
send a radio resource control (RRC) message to the terminal device, wherein the RRC message comprises the first measurement gap configuration information.

23. The apparatus of claim 21, wherein the transceiver unit is configured to:
send a new radio positioning protocol A (NRPPa) message to the core network device, wherein the NRPPa message comprises the first measurement gap configuration information.

24. The apparatus of claim 19, wherein the transceiver unit is configured to:
receive an NRPPa message sent by the core network device, wherein the NRPPa message comprises the first configuration information.

25. An apparatus for configuring a measurement gap, comprising:
a transceiver unit, configured to send first configuration information to a radio access network (RAN) device;
wherein the first configuration information is configured to determine first measurement gap configuration information, and the first measurement gap configuration information is used to configure a measurement gap for a terminal device.

26. The apparatus of claim 25, wherein the transceiver unit is further configured to:
receive the first measurement gap configuration information sent by the RAN device.

27. The apparatus of claim 25, wherein the first configuration information comprises at least one of positioning reference signal (PRS) configuration information or second measurement gap configuration information.

28. The apparatus of claim 26, wherein the transceiver unit is configured to:
receive a new radio positioning protocol A (NRPPa) message sent by the RAN device, wherein the NRPPa message comprises the first measurement gap configuration information.

29. The apparatus of claim 25, wherein the transceiver unit is configured to:
send an NRPPa message to the RAN device, wherein the NRPPa message comprises the first configuration information.

30. An apparatus for configuring a measurement gap, comprising:
a processing unit, configured to determine second measurement gap configuration information; and
a transceiver unit, configured to send the second measurement gap configuration information through a radio access network (RAN) device, wherein the second measurement gap configuration information is used to configure a measurement gap for a terminal device.

31. The apparatus of claim 30, wherein the transceiver unit is further configured to:
send the second measurement gap configuration information to the RAN device.

32. The apparatus of claim 30, wherein the transceiver unit is configured to:
determine the second measurement gap configuration information based on at least one of positioning reference signal (PRS) configuration information, a positioning precision, or a positioning delay requirement.

33. The apparatus of claim 30, wherein the transceiver unit is configured to:
sending a long term evolution positioning protocol (LPP) message through the RAN device, wherein the LPP message comprises the second measurement gap configuration information.

34. The apparatus of claim 31, wherein the transceiver unit is configured to:
send a new radio positioning protocol A (NRPPa) message to the RAN device, wherein the NRPPa message comprises the second measurement gap configuration information.

35. An apparatus for configuring a measurement gap, comprising:
a transceiver unit, configured to receive second measurement gap configuration information sent by a core network device, wherein the second measurement gap configuration information is used to configure a measurement gap for a terminal device.

36. The apparatus of claim 35, wherein the transceiver unit is configured to:
receive a new radio positioning protocol A (NRPPa) message sent by the core network device, wherein the NRPPa message comprises the second measurement gap configuration information.

37. A communication device, comprising a processor and a memory, wherein the memory stores a computer program, and the processor executes the computer program stored in the memory, to cause the device to perform the method according to any one of claims 1 to 6 or the method according to any one of claims 17 to 18.

38. A communication device, comprising a processor and a memory, wherein the memory stores a computer program, and the processor executes the computer program stored in the memory, to cause the device to perform the method according to any one of claims 7 to 11 or the method according to any one of claims 12 to 16.

39. A communication device, comprising a processor and an interface circuit;
wherein the interface circuit is configured to receive code instructions and transmit the code instructions to the processor; and
the processor is configured to run the code instructions to execute the method according to any one of claims 1 to 6 or the method according to any one of claims 17 to 18.

40. A communication device, comprising a processor and an interface circuit;
wherein the interface circuit is configured to receive code instructions and transmit the code instructions to the processor; and
the processor is configured to run the code instructions to execute the method according to any one of claims 7 to 11 or the method according to any one of claims 12 to 16.

41. A computer-readable storage medium storing instructions, wherein when the instructions are executed, the method of any one of claims 1 to 6 is implemented or the method of any one of claims 17 to 18 is implemented.

42. A computer-readable storage medium storing instructions, wherein when the instructions are executed, the method of any one of claims 7 to 11 is implemented or the method of any one of claims 12 to 16 is implemented.
